# EUROPEAN PATENT SPECIFICATION

(11) **EP 2 657 192 B1**
(45) Date of publication and mention of the grant of the patent: **20.03.2019**
(21) Application number: 12165807.4
(22) Date of filing: 26.04.2012
(51) Int. Cl.: C02F 1/20, C02F 101/34

(54) **REDUCING ORGANIC IMPURITIES IN WASTE WATER**
VERMINDERUNG VON ORGANISCHEN VERUNREINIGUNGEN IN ABWASSER
RÉDUCTION DES IMPURETÉS ORGANIQUES DANS DES EAUX USÉES

(43) Date of publication of application: 30.10.2013
(73) Proprietor: Borealis AG, 1220 Vienna (AT)
(72) Inventor: Purola, Veli-Matti, 06650 Porvoo (FI)
(74) Representative: Dehns

(56) References cited:
- WO-A1-02/22236
- WO-A1-2009/080338

## Description

This invention relates to the treatment of waste water streams, in particular waste water streams produced during the manufacture of phenol from cumene. In particular, the invention relates to stripping organic impurities from waste water streams with the off gases produced during the oxidation of cumene to cumene hydroperoxide in the first step of phenol production.

### Background of Invention

Phenol is commonly manufactured from cumene. In this process, cumene is oxidized to cumene hydroperoxide (CHP) and the resulting oxidation product mixture is concentrated and subjected to a cleavage reaction. Subsequently, the cleavage product mixture is conducted to a distillation section, wherein the main products of the cleavage reaction, i.e. phenol and acetone, are first separated and then purified through a series of distillation steps or other purification steps.

The conversion of cumene to phenol via cumene hydroperoxide is a well known commercial process used across the globe to produce large quantities of phenol (and acetone). The conversion of cumene to phenol inevitably produces by-products and impurities of course. Many of these are relatively heavy organic compounds such as acetophenone, carbinol and α-methyl styrene (AMS) which remain in the organic phase (along with unreacted cumene, cumene hydroperoxide or phenol) and cause problems during purification. There are, however, various known methods for dealing with these impurities.

This invention primarily relates to lighter chemical impurities/by products formed during phenol production, in particular during the cumene oxidation step. Most especially, this invention relates to problems associated with the formation of methanol. Due to its high solubility methanol is often found in waste water streams produced during phenol production. Moreover, other chemicals such as acetone, cumene and phenol can often be found in waste water streams in unacceptably high levels. This application relates to a method for removing organic impurities, especially methanol, from waste water streams generated in a cumene-to-phenol process.

In the well known cumene-to-phenol process, methanol is produced as a minor by-product during the cumene oxidation reaction step. Several reactor designs exist in the industry today for carrying out this oxidation step but the reaction is typically conducted at 85-130°C and 0.1 to 8 barg. In these processes, air is continuously introduced into liquid cumene contained in a plurality of oxidation columns. The oxygen in the air serves as raw material to produce the desired intermediate product, cumene hydroperoxide. The nitrogen contained in the air feed stream along with 1-10 vol-% residual oxygen exits the top of each of the reactors as an off gas. This "off gas" stream typically contains water, cumene and volatile organic compounds (VOC's) including methanol.

Prior to venting, the current standard practice is to pass this "off gas" stream through a series of heat exchanger coolers, refrigerated condensers and activated carbon adsorption beds to recover the cumene contained therein and to prevent VOC emissions to the environment.

Water and caustic may be injected during the condensing stage to neutralize acidic components in the off-gas. Water injection also increases methanol recovery as described in patent application WO02/22236. Condensed cumene and water phases can be separated in a decanter and the water phase is then sent to waste water treatment. Condensed methanol is typically dissolved in water and forms therefore a methanol containing waste water stream. Cumene can be recycled to the start of the oxidation process.

Once treated the off gas is conventionally passed to a thermal oxidizer or is subjected to adsorption on activated carbon.

Whilst the off gas contains a small amount of methanol and other organic impurities, the major fraction of the light by-products such as methanol are found in waste water. It is also inevitable that the waste water contains some cumene. Other waste water streams from different parts of the cumene to phenol process are likely to contain phenol and acetone.

Although in state-of the art plants water circulation is almost closed there is still significant chemical oxygen demand (COD) load to waste water treatment. There are also drainage waste waters and accidental spills which may contain light water soluble impurities like acetone. These waste water streams contain impurities such as phenol or acetone and chloride compounds which may be corrosive if returned to the distillation section waste water recycle. If these waste water streams are sent to further treatment as such, then peak chemical oxygen demand load may be significant in a final waste water treatment unit.

It will be appreciated that health and safety regulations do not allow water to be released into the environment containing high levels of any light or heavy organic compound. Waste water streams in phenol production processes are therefore carefully treated at significant expense to minimise organic compound content.

Thus, organic compounds found in water streams place a significant chemical oxygen demand (COD) in waste water treatment. Chemical oxygen demand, or in short COD, is a measure of how much oxygen is needed to fully oxidize any quantity of some compounds containing either carbon, hydrogen or both). Cutting the amount of organic compounds in the waste water streams would significantly decrease COD load. However, so as to maximise efficiency of cumene recovery it is necessary to condense off gases to recycle the cumene therein.

Recovery of valuable cumene in the cumene oxidation section increases COD in subsequent waste water treatment because of the higher amount of methanol and other organics in the waste water. The skilled person is therefore presented with a problem.

Steps have to be taken therefore to remove the organics from waste water. Thermal oxidation is the preferred method to destroy organics in off-gases. One advantage of the use of thermal oxidation is that it reduces the recycle of many contaminants back to cumene oxidation..

There is therefore a need for a treatment method which removes light organic impurities from waste waters in the phenol product process.

The conventional method to remove light impurities from waste water streams involves steam stripping, liquid extraction or adsorption. None of these methods is ideal. Significant additional energy input is needed to use steam stripping as that involves boiling water. Moreover, if steam stripping is used then the amount of waste water increases and this increases load to the final waste water treatment unit.

The use of adsorption media for example, activated carbon, is also problematic. Active carbon is an expensive product to be used on massive industrial scale. Moreover, once adsorption has occurred, the carbon has to be regenerated and at the end of life cycle destroyed as hazardous solid waste. Activated carbon also has the drawback that it is not effective to absorb methanol.

Liquid extraction requires the use of a solvent that will remove the impurities from water. That is not easy when the impurity is acetone or methanol and is very water soluble. The extraction media also has to be constantly regenerated, normally by heat. An alternative solution is needed.

The present inventors have realised that off-gases from the oxidation stage of the phenol product process (i.e. the off gas from the conversion of cumene to cumene hydroperoxide) can be used as a stripping agent to remove organic components from waste water streams from any part of the phenol production process. This is an ideal solution as there is a constant, abundant source of the off gas and the off gas from the oxidation section of the cumene process is low in oxygen making it a safe gas for stripping organics from water. Its oxygen content is preferably 3-5 vol-% which is below the explosive concentration range.

### Summary of Invention

Viewed from one aspect the invention provides the use of off gas from the oxidation of cumene to cumene hydroperoxide comprising mostly nitrogen and 1 to 8 vol% oxygen to strip at least one organic compound from a waste water stream containing said at least one organic compound formed during phenol production.

Viewed from another aspect the invention provides a process for purifying a waste water stream containing at least one organic compound formed during a phenol production process, comprising:
(i) oxidising cumene to cumene hydroperoxide with air so as to form cumene hydroperoxide and an off gas;
(ii) contacting a waste water stream containing at least one organic compound formed during phenol production with off gas from step (i) so as to strip at least some of said at least one organic compound from said waste water stream and into said off gas; and
(iii) optionally thermally oxidising or otherwise treating off gas from step (ii).

Viewed from another aspect the invention provides a process for purifying a waste water stream formed during a phenol production process comprising:
(i) oxidising cumene to cumene hydroperoxide with air so as to form cumene hydroperoxide and an off gas;
(ii) taking off gas from step (i) and heating the same;
(iii) contacting a waste water stream containing at least one organic compound formed during phenol production with off gas from step (ii) so as to strip at least some of said at least one organic compound from said waste water stream and into said off gas; and
(iv) optionally thermally oxidising or otherwise treating off gas from step (iii).

Viewed from another aspect the invention provides a process for purifying a waste water stream formed during a phenol production process comprising:
(i) oxidising cumene to cumene hydroperoxide with air so as to form cumene hydroperoxide and an off gas;
(ii) taking off gas produced during step (i) and passing said gas through a condenser;
(iii) taking off gas that exits the condenser and heating the same;
(iv) contacting a waste water stream containing at least one organic compound formed during phenol production with off gas from step (iii) so as to strip at least some of said at least one organic compound from said waste water stream and into said off gas; and
(v) optionally thermally oxidising or otherwise treating off gas from step (iv) such as passing off gas through a condenser and condensing organics therefrom to be treated elsewhere.

Viewed from another aspect the invention provides a process for purifying a waste water stream formed during a phenol production process, comprising:
(i) oxidising cumene to cumene hydroperoxide with air so as to form cumene hydroperoxide and an off gas containing methanol;
(ii) taking off gas produced during step (i) and passing said gas through a condenser in the presence of water; so as to form at least a second off gas and a waste water stream which contains at least methanol as organic compound;
(iii) taking off gas that exits the condenser and, when necessary, heating the same;
(iv) contacting said waste water stream with off gas from step (iii) so as to strip at least some of said methanol from said waste water stream and into said off gas; and
(v) optionally thermally oxidising or otherwise treating off gas from step (iv) such as passing off gas through a condenser and condensing organics therefrom to be treated elsewhere.

Viewed from another aspect the invention provides a process for purifying a waste water stream formed during a phenol production process, comprising:
(i) oxidising cumene to cumene hydroperoxide with air so as to form cumene hydroperoxide and an off gas stream containing at least one organic compound;
(ii) taking off gas produced during step (i), injecting water and /or caustic to said off gas and passing water and/or caustic treated off gas through a condenser so as to form at least a second off gas stream and a waste water stream which contains at least one organic compound;
(iii) taking the off gas that exits the condenser and, when necessary, heating the same;
(iv) contacting said waste water stream from step (ii) which contains at least one organic compound with off gas from step (iii) so as to strip at least some of said at least one organic compound from said waste water stream into said off gas; and
(v) optionally thermally oxidising or otherwise treating the off gas from step (iv) such as passing off gas through a condenser and condensing organics therefrom to be treated elsewhere.

Viewed from another aspect the invention provides an apparatus suitable for carrying out the process as hereinbefore defined comprising:
- a plurality of oxidation reactors connected in series each reactor having an off gas stream which are combined to form a single off gas stream;
- a condenser adapted to accept said combined off gas stream which enables the formation of a condensed phase and a second off gas stream;
- a heating means adapted to heat the second off gas exiting the condenser;
- a stripper adapted to allow contact of the heated second off gas and a organic compound containing waste water stream waste water stream formed during the phenol production process.

### Definitions

By off gas from the oxidation of cumene to cumene hydroperoxide is meant the gas that is formed after air has been used to convert cumene to cumene hydroperoxide. That gas may be used directly but it is preferably subjected to condensing and reheating as described in detail herein.

### Detailed description of invention

The oxidation of cumene can be carried out using a so-called wet-oxidation procedure, in which oxidation takes place in the presence of air but in solution with the help of an aqueous solution of, for example, a carbonate. Dry oxidation procedures, where the only compounds introduced into the reaction mixture are the starting material (cumene) and the oxidation gas, are getting more common. Both methods produce an off gas low in oxygen content and are applicable here. The oxidation is preferably operated as a dry oxidation, i.e. no aqueous phase containing alkaline component such as sodium carbonate is separately added to the oxidation reactors.

Oxidation of cumene into cumene hydroperoxide (CHP) has been thoroughly described in the prior art (as in GB 1006319, JP 4305564, JP 2000290249, JP 2000302752 and JP 2003231674). The oxidation process can be carried out conventionally and will not be fully described here.

The process involves conducting cumene to at least the first reactor in a series of oxidation reactors. Typically this cumene feed is quite pure and essentially contains cumene and minor amounts of impurities. It may contain recycled caustic washed cumene or recycled cumene may be fed separately to the first (or other) reactors in the series. The cumene feed is a liquid feed. Whilst this fresh cumene feed can be fed to more than one reactor in the series, it is especially preferred if fresh cumene (i.e. cumene not part of the oxidation mixture) is fed to the first reactor only.

Along with cumene, air is also fed to at least the first reactor in the series to thereby form an oxidation mixture. The cumene feed and oxygen containing gas feed are preferably fed separately.

Once the oxidation mixture is formed in the first reactor, CHP forms. That part of the oxidation mixture which is displaced by the liquid being fed into a reactor is then conducted from the first reactor to at least one subsequent reactor, preferably the next one in the series. Oxidation mixture from each reactor is preferably transferred to at least the next reactor downstream thereof in the series.

A series of 3-8 reactors is typically used. Unlike cumene, fresh oxygen containing gas is preferably added to every reactor in the series.

The reactors are all operated at a pressure of 0.1-8 barg, preferably 4-5 barg. The operating temperature is 90-115°C. Since the oxidation is an exothermic reaction, the reactors may require external cooling.

Off gases from each reactor are separated from the oxidation mixture at the top of each reactor. As the reaction to cumene hydroperoxide proceeds, it will be appreciated that the oxygen content in the gas present in the oxidation reactor reduces as it is used up by the reaction. This means that the off gas which exits from the oxidation reaction is low in oxygen. The off gas used in the present invention is one conventionally produced by any cumene to cumene hydroperoxide oxidation reaction.

The off gas which exits the oxidation reactor(s) comprises mostly nitrogen, e.g. 85-90 vol-%. It should also contain between 1 to 8 vol-% oxygen, preferably 3-5 vol-% oxygen. The main organic component is cumene. Cumene concentration is typically in the range 2-14 vol %. The concentration of cumene depends on the operation pressure and temperature. At 3.8 barg typical cumene concentration is 3-6 vol-%. The off gas may also contain small amounts of organic byproducts/ impurities formed during the oxidation process. In particular, these include formic acid and methanol. The off gas may also contain water. Water may be present in the cumene and/or air feeds.

It should remembered that the oxygen content of the off gas is low as most of the oxygen in the air reacts with the cumene to form the cumene hydroperoxide. The oxygen content of the off gas is typically so low that the gas is always below the explosive limit for safety reasons.

The temperature of the off gas that leaves the oxidation reactors may be 90-115°C. It will be appreciated that a conventional cumene oxidation process uses a plurality of cumene oxidation reactors and off gas can be produced from each of these reactors. The invention can use the off gas from one, more than one or all of these reactors combined. Typically, all the off gases from each reactor are combined before further treatment. It will be appreciated that at any point in the process of the invention, it may not be necessary to use all the off gas which is present at the end of a stage of the process. The skilled person appreciates that the amount of off gas used is a function of the stripping process. The invention therefore covers taking a part of the off gas or all of the off gas from a particular stage of the process for use in subsequent stages.

The off gas which leaves the oxidation reactor could be used in stripping immediately but as it contains significant amounts of valuable compounds, in particular cumene, this is not preferred. There is still enough cumene to merit removing it from the off gas as it is a valuable resource.

The off gas may also contain acidic impurities that need to be neutralized. The off gas is therefore preferably condensed in a standard condenser/heat exchanger. It is common for caustic to be injected into the off gas/condenser at this point.

Caustic solution which may be injected into the off gases, preferably contains 0.2 to 2.0 wt% of NaOH, more preferably about 0.5 wt% of NaOH, in order to purify them from acids. Water may then be injected in order to purify off gases from excess caustic.

The off gas is therefore passed to a heat exchanger/condenser to be cooled. Off gases are preferably cooled to a temperature of less than 20°C, especially less than 10°C, most preferably less than 5°C. By doing so, organic compounds within the off gas such as cumene condense and can be separated from the off gas components such as oxygen and nitrogen that will not condense at these temperatures. Any water present in the off gas is also likely to condense.

As cumene is a valuable resource this condensation process is important. It will be appreciated that water within the off gas will also condense along with methanol and other organic impurities present in the off gas. Typically therefore, the condenser produces a two phase mixture of cumene in one phase and water containing methanol and other compounds in another. These can be separated by phase separation.

The cumene can be sent back to the oxidation process. The water phase, however, needs to be treated before being discharged.

The off gas which exits the condenser contains low levels of cumene and methanol. The off gas comprises mostly nitrogen (e.g. at least 90 vol % nitrogen, preferably at least 94 vol-% nitrogen) and between 1 to 8 vol % oxygen, preferably 3 to 5 vol % oxygen. The off gas may also still contain cumene and small amounts of organic by products/impurities formed during the oxidation process. In particular, these include methanol. The off gas may also contain small amounts of water. The amounts of any organic impurities in the off gas are preferably very low at this stage, such as less than 0.5 vol-%, especially less than 0.2 vol %. In particular the methanol content may be less than 0.05 wt%. The concentration of organics depends on the operation pressure and condensing temperature and possible water and caustic injection.

There may be traces of methane and toluene in the off gas.

The off gases may also contain some water, preferably less than 0.5 vol-% water, especially less than 0.25 vol % water.

The off gas is conventionally sent to a thermal oxidizer at this point to remove any last traces of organic compounds or perhaps to sent for treatment on activated carbon for adsorption of remaining organics.

The present inventors have realised that the off gas which exits the condenser provides an ideal, low cost gas stream which can be used to strip organic compounds from waste water streams such as the methanol containing waste water stream discussed above which exits the condenser.

It provides a much cheaper alternative to more conventional steam stripping or the use of activated carbon or liquid extraction.

### Waste Water Sources

The waste water source treated with the off gas according to the invention can be any waste water source which contains organics which need to be removed formed during the phenol production process.

There are various waste water sources during phenol production. The first and main source derives from the treatment of the off gas during the oxidation reaction as discussed above.

There are various water based treatments in the phenol production process all of which yield waste water streams that may need to be treated to remove organic compounds.

The amount of methanol formed in the oxidation of cumene to cumene hydroperoxide is in the range 0.5 to 1.5 kg/ton phenol, depending on operation conditions during oxidation, and a major part of that is condensed and dissolved in the water phase and hence in the waste water.

Methanol concentration in the oxidation section waste water may be in the range 5000 to 10000 wt ppm. The amount of oxidation section waste water is in the range 20 to 100 kg/ton phenol.

It is obviously essential to remove methanol from water and the present invention offers a cheap solution to that problem.

Waste water streams can also come from simple cleaning operations, e.g. spillage cleaning and so on. There are a number of possible waste water streams in the phenol production process which will be familiar to the skilled person. The present invention is suitable for the treatment of any of these to remove unwanted organic compounds to ensure that residual levels of organics in the waste water are below environmental standards.

Waste water stream from the oxidation process do not contain significant amounts phenol or other heavy water soluble organics. However, waste waters from the oxidation section may contain minor amounts of peroxides like methylhydroperoxide (MHC). Waste waters from the oxidation section may therefore be treated thermally to destroy MHC (a biocide) before or after stripping.

### Stripping Process

The off gas from the cumene oxidation reaction can be used to strip organic compounds such as methanol from waste water streams produced during oxidation in the phenol production process. In the stripping process, one or more components are removed from the liquid waste water stream by the off gas stream. Ideally methanol and/or acetone are removed.

The off gas is preferably heated, if necessary, before stripping. It may be heated to a temperature of at least 80°C, such as 90 to 120°C before stripping.

The water supplied to the stripper is preferably at a temperature of 30 to 50°C.

The off gas is passed into vessel (a conventional stripper) along with the waste water. It will be preferred if the off gas is supplied to the base of any vessel so that it passes through any waste water within the vessel as it rises. Waste water is therefore preferably fed towards the top of the stripping vessel.

The stripper may be provided with trays as is well known in the art. The actual stripper apparatus is well known to the skilled person and has the same design as a conventional steam or air stripper. The stripper will comprise a column preferably provided with a series of trays. Stripping can also be carried out in a packed column.

The column can optionally be provided with a condenser or re-boiler. More preferably, the column is provided with a condenser and reflux. Still more preferably, the invention comprises a column with a condenser, reflux and distillate recovery. The design is thus conventional. In one option a reboiler may be used to boost stripping.

In a preferred embodiment and ideally to reduce water content in the off gas sent to thermal oxidation, the off gas removed from the top of the stripper is sent to a condenser. Here the water present in the off gas is condensed and sent back to the stripper as reflux. Stripped impurities may be condensed from the gas stream and passed, for example, to be recovered or destroyed elsewhere.

In a preferred embodiment therefore, after the stripping step, the off gas which now contains the extracted organic compound is passed through a condenser and organic compound(s) condensed therefrom. These can then be treated as the skilled person sees fit.

It is preferred if there is a counter current flow between waste water stream and off gas streams.

It is especially preferred that a methanol containing waste water stream from the oxidation of cumene to cumene hydroperoxide forms at least a part of the waste water and is stripped with off-gases from the same oxidation reaction.

Oxidation off-gases can in general be used for stripping organic components (for example acetone or cumene) from other phenol plant waste waters.

Off-gases can be used for stripping organics from other waste waters which have organics which can be recovered or destroyed in thermal or catalytic oxidation.

It should be emphasized that the oxidation off gases can be used in the same way as any other gases used for stripping. The temperature and pressure, the VLE (vapor-liquid-equilibrium) and the stripper design will define the performance of stripper. Suitable pressures within the stripper may be in the range of 0 barg to 8 barg, preferably 0 barg to 2 barg. Flows through the stripper will vary depending on the design requirements of the stripper.

The present invention therefore reduces the organic load in waste water streams making these easier to release into the environment. We eliminate the need to use expensive steam stripping in waste water treatment. The invention relies on the use of a freely available off gas before it is incinerated. Finally, the stripping procedure recovers organic compounds from waste water and into the off gas. This actually makes the off gas easier to incinerate as there is more fuel in the off gas than there would be conventionally. It is normal to supply the off gas with additional fuel in order to support incineration of the organic components within the off gas. As this process increases the organic load in the off gas, less fuel gas (support fuel) is needed for the thermal oxidizer.

In theory a series of strippers can be used to maximise purification.

The invention will now be described with reference to the following non limiting examples and figures.

### Description of the drawings

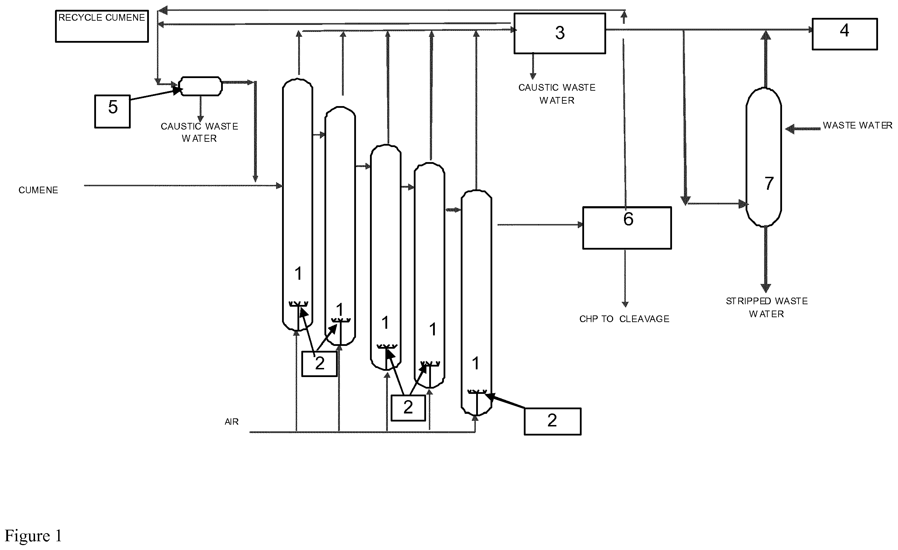

Figure 1 is a depiction of a suitable reactor set up for cumene oxidation to cumene hydroperoxide. The apparatus contains the following parts (Fig. 1)

| | |
|---|---|
| 1 | oxidizing reactors |
| 2 | air spargers |
| 3 | condenser |
| 4 | thermal oxidizer or activated carbon beds |
| 5 | cumene purification unit |
| 6 | CHP concentrator |
| 7 | waste water stripper |

The apparatus thus contains a series of 3-8 oxidizing reactors 1, which are operated in series, preferably with reducing liquid levels so that the first reactor has the highest liquid level and the last one has the lowest liquid level, whereby the liquid driving force for passing the oxidation mixture from one reactor to the next is gravity. An air sparger 2 is present in each reactor 1 for evenly distributing the air conducted into the reactors. Air is conducted into the reactors 1, through air spargers 2 Internal cooling coils for cooling the oxidation mixture (not shown in Figure 1) may also be present. One or more condensers 3 connected to the top section of the reactors 1 is provided for condensing the off-gases. There may be provided a separate condenser 3 for each oxidation reactor 1, but preferably the off-gases are combined, and subsequently conducted to one single condenser 3 for combined condensing.

Non condensed off gases are removed through line 4 and are taken typically to a thermal oxidizer or activated carbon beds. According to this invention off gas or part of the off gas is taken to waste water stripper 7 and preferably returned to be treated in a thermal oxidizer or in activated carbon beds.

According to a preferred embodiment of the present invention, the apparatus further comprises a cumene purification unit 6 for purifying the cumene starting material.

After the reaction mixture has been conducted through the oxidation reactors 1, it is conducted to a CHP concentrator 6 for removing unreacted cumene and some by-products and impurities and, thus, concentrating the CHP of the mixture.

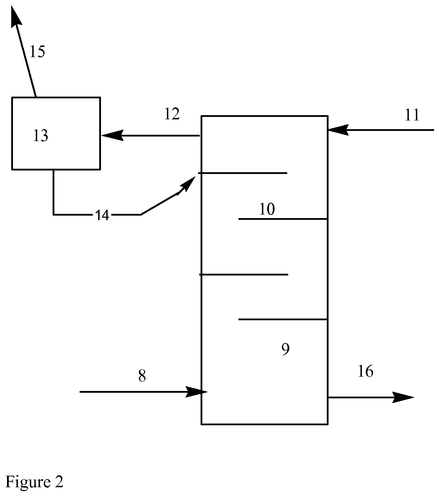

In Figure 2, off gas from the oxidation section are passed through conduit (8) into stripper vessel (9). This is effected at the bottom of stripper (9). The stripper (9) is provided with a series of trays or packings (10). Waste water enters the stripper from the top via conduit (11). Figure 1 shows various possible sources of waste water. Where waste waters are treated with caustic, it is possible to neutralise these before use in the stripper, e.g. via water washing.

Gas containing organic compounds stripped from the waste water exits the top of the stripper via conduit (12) and into condenser (13). Condensate from the condenser is added back to the stripper via reflux (14). A distillate can be drawn from the condenser (not shown). This provides a concentrated stream of impurities. Off gas leaves condenser (13) to thermal oxidation or other treatment (15). Water leaves the stripper via conduit (16) to drain.

### Examples

Examples 1 and 2 are computer simulations of a set up as described herein in which off gases from the oxidation stage of cumene oxidation are used as a stripping gas for a waste water stream.

### Example 1

In this example the stripper consists of a column without condenser or re-boiler. Off gas is fed to the bottom of the column and water to the top of the column. The number of theoretical trays is 4. Off-gas cumene, methanol and acetone concentrations are typical of those observed after cooling the oxidation off-gas to 2°C. Methanol and acetone feed concentrations in the waste water are 10 000 w-ppm.

The off gas is fed to the column at a gas inlet temperature of 105°C and water is fed at an inlet temperature of 40°C. In the stripper, the temperature decreases because almost dry gas is contacted with water and gas get saturated by flashing water so that the bottom temperature (water outlet) is 32.6°C and the top temperature (gas outlet) is 32.7°C.

The example shows that the methanol concentration decreases from 1% (10,000 wtppm) to less than 0.1 wt% (868 ppm). Acetone is stripped almost completely (down to 25 ppm). Also cumene is completely eliminated from the waste water stream. Results of the simulation are presented in Table 1.

| | Case 1: No condenser | | | |
|---|---|---|---|---|
| | Gas Feed | Water feed | Bottom (water exiting) | Overhead |
| Mass Flow kg/hr | | | | |
| N2 | 4754,725 | 0,058 | 0,013 | 4754,771 |
| O2 | 231,896 | 0,005 | 0,001 | 231,900 |
| Acetone | 0,395 | 10,000 | 0,025 | 10,371 |
| Methanol | 0,957 | 10,000 | 0,868 | 10,089 |
| Water | 5,349 | 979,844 | 819,402 | 165,790 |
| Cumene | 6,677 | 0,093 | 0,000 | 6,771 |

| Mass % | | | | |
|---|---|---|---|---|
| | Case 1: No condenser | | | |
| N2 | 95,095 % | 0,006 % | 0,002 % | 91,796 % |
| O2 | 4,638 % | 0,001 % | 0,000 % | 4,477 % |
| Acetone | 0,008 % | 1,000 % | 0,003 % | 0,200 % |
| Methanol | 0,019 % | 1,000 % | 0,106 % | 0,195 % |
| Water | 0,107 % | 97,984 % | 99,890 % | 3,201 % |
| Cumene | 0,134 % | 0,009 % | 0,000 % | 0,131 % |
| Total Flow kg/hr | 5000 | 1000 | 820 | 5180 |
| Temperature C | 105 | 40 | 32,6 | 32,7 |
| Pressure kPa (abs) | 110 | 110 | 103 | 100 |

### Example 2

In this example the stripper is also provided with a partial vapour/liquid condenser. Cooling duty of the condenser is 100 kW. The gas exiting the stripper is passed through the condenser to condense any condensable components thereof. All liquid condensate is recycled as reflux to top of the stripper.

Gas and liquid feed temperatures are 100°C and 50°C respectively. The feed compositions are the same as in example 1.

This example shows that the amount of water in overhead can be decreased using a condenser.

| | Case 2: Condenser 100 kW | | | |
|---|---|---|---|---|
| | Gas Feed | Water feed | Bottom (water exiting) | Overhead (gas exiting) |
| Mass Flow kg/hr | | | | |
| N2 | 4754,725 | 0,058 | 0,015 | 4754,768 |
| O2 | 231,896 | 0,005 | 0,001 | 231,900 |
| Acetone | 0,395 | 10,002 | 0,030 | 10,367 |
| Methanol | 0,957 | 10,002 | 2,131 | 8,828 |
| Water | 5,349 | 979,840 | 924,638 | 60,551 |
| Cumene | 6,677 | 0,093 | 0,000 | 6,771 |

| Mass % | | | | |
|---|---|---|---|---|
| N2 | 95,095 % | 0,006 % | 0,002 % | 93,724 % |
| O2 | 4,638 % | 0,001 % | 0,000 % | 4,571 % |
| Acetone | 0,008 % | 1,000 % | 0,003 % | 0,204 % |
| Methanol | 0,019 % | 1,000 % | 0,230 % | 0,174 % |
| Water | 0,107 % | 97,984 % | 99,765 % | 1,194 % |
| Cumene | 0,134 % | 0,009 % | 0,000 % | 0,133 % |
| Total Flow kg/hr | 5000 | 1000 | 926,8 | 5073,2 |
| Temperature C | 100 | 50 | 31,5 | 16,5 |
| Pressure kPa (abs) | 110 | 110 | 103 | 100 |

The purpose of the condenser is to allow reduction in the water content of the gas exiting the top of the stripper. The downside to its use is a slight decrease in the methanol content of the overhead gas.

## Claims

1. Use of off gas from the oxidation of cumene to cumene hydroperoxide comprising mostly nitrogen and 1 to 8 vol% oxygen to strip at least one organic compound from a waste water stream containing said at least one organic compound formed during phenol production.

2. A process for purifying a waste water stream containing at least one organic compound formed during a phenol production process, comprising:
(i) oxidising cumene to cumene hydroperoxide with air so as to form cumene hydroperoxide and an off gas;
(ii) contacting a waste water stream containing at least one organic compound formed during phenol production with off gas from step (i) so as to strip at least some of said at least one organic compound from said waste water stream and into said off gas; and
(iii) optionally thermally oxidising or otherwise treating off gas from step (ii).

3. A process as claimed in claim 2 comprising:
(i) oxidising cumene to cumene hydroperoxide with air so as to form cumene hydroperoxide and an off gas;
(ii) taking off gas from step (i) and heating the same;
(iii) contacting a waste water stream containing at least one organic compound formed during phenol production with off gas from step (ii) so as to strip at least some of said at least one organic compound from said waste water stream and into said off gas; and
(iv) optionally thermally oxidising or otherwise treating off gas from step (iii).

4. A process as claimed in claim 3, wherein step (ii) comprises
(iia) taking off gas produced during step (i) and passing said gas through a condenser;
(iib) taking off gas that exits the condenser and heating the same.

5. A process as claimed in claim 4 wherein
the off gas from step (i) contains methanol;
in step (iia) the off gas produced during step (i) is passed through said condenser in the presence of water; so as to form at least a second off gas and a waste water stream which contains at least methanol as organic compound;
and wherein step (iii) involves contacting said waste water stream from step (iia) with off gas from step (iib) so as to strip at least some of said methanol from said waste water stream and into said off gas.

6. A process as claimed in claim 4 wherein said off gas from step (i) contains at least one organic compound;
wherein step (iia) comprises taking off gas produced during step (i), injecting water and /or caustic to said off gas and passing water and/or caustic treated off gas through a condenser so as to form at least a second off gas stream and a waste water stream which contains at least one organic compound;
and wherein step (iii) comprises contacting said waste water stream from step (iia) which contains at least one organic compound with off gas from step (iib) so as to strip at least some of said at least one organic compound from said waste water stream into said off gas.

7. A process as claimed in claims 2 to 6 wherein the off gas is passed through a condenser and organics condensed therefrom.

8. A process as claimed in claim 2 to 7 wherein the oxygen content of the off gas is 3-5 vol %.

9. A process as claimed in claim 2 to 8 wherein said at least one organic compound is methanol.

10. A process as claimed in claim 9 wherein the methanol content in waste water stream is at least 1000 ppm.

11. A process as claimed in claim 4 to 10 further comprising:
(iv) passing the off gas from step (iv) to a condenser to form a condensate which is recycled back to step (iii).

12. An apparatus suitable for carrying out the process as claimed claims 4 to 11 comprising:
- a plurality of oxidation reactors connected in series each reactor having an off gas stream which are combined to form a single off gas stream;
- a condenser adapted to accept said combined off gas stream which enables the formation of a condensed phase and a second off gas stream;
- a heating means adapted to heat the second off gas exiting the condenser;
- a stripper adapted to allow contact of the heated second off gas and a organic compound containing waste water stream formed during the phenol production process.

## Patentansprüche

1. Verwendung von einem Abgas aus der Oxidation von Cumol zu Cumolhydroperoxid, umfassend hauptsächlich Stickstoff und 1 bis 8 Vol.-% Sauerstoff, um mindestens eine organische Verbindung aus einem Abwasserstrom, der die mindestens eine organische Verbindung enthält und während der Phenolherstellung gebildet wird, zu strippen.

2. Verfahren zum Reinigen von einem Abwasserstrom, der mindestens eine organische Verbindung enthält und während eines Phenolherstellungsverfahrens gebildet wird, umfassend:
(i) Oxidieren von Cumol zu Cumolhydroperoxid mit Luft, um Cumolhydroperoxid und ein Abgas zu bilden;
(ii) In-Kontakt-Bringen von einem Abwasserstrom, der mindestens eine organische Verbindung enthält und während der Phenolherstellung gebildet wird, mit Abgas aus dem Schritt (i), um zumindest etwas von der mindestens einen organischen Verbindung aus dem Abwasserstrom und in das Abgas zu strippen; und
(iii) optional thermisches Oxidieren oder anderweitiges Behandeln des Abgases aus dem Schritt (ii).

3. Verfahren nach Anspruch 2, umfassend:
(i) Oxidieren von Cumol zu Cumolhydroperoxid mit Luft, um Cumolhydroperoxid und ein Abgas zu bilden;
(ii) Nehmen von dem Abgas aus dem Schritt (i) und Erwärmen desselben;
(iii) In-Kontakt-Bringen von einem Abwasserstrom, der mindestens eine organische Verbindung enthält und während der Phenolherstellung gebildet wird, mit Abgas aus dem Schritt (ii), um zumindest etwas von der mindestens einen organischen Verbindung aus dem Abwasserstrom und in das Abgas zu strippen;
(iv) optional thermisches Oxidieren oder anderweitiges Behandeln des Abgases aus dem Schritt (iii).

4. Verfahren nach Anspruch 3, wobei der Schritt (ii) das Folgende umfasst:
(iia) Nehmen von Abgas, das während des Schritts (i) hergestellt wird, und Leiten von dem Gas durch einen Kondensator;
(iib) Nehmen von Abgas, das den Kondensator verlässt, und Erwärmen desselben.

5. Verfahren nach Anspruch 4,
wobei das Abgas aus dem Schritt (i) Methanol enthält;
wobei in dem Schritt (iia) das Abgas, das während des Schritts (i) hergestellt wird, in Gegenwart von Wasser durch den Kondensator geleitet wird; um mindestens ein zweites Abgas und einen Abwasserstrom, der als organische Verbindung zumindest Methanol enthält, zu bilden;
und wobei der Schritt (iii) das In-Kontakt-Bringen von dem Abwasserstrom aus dem Schritt (iia) mit dem Abgas aus dem Schritt (iib) umfasst, um zumindest etwas von dem Ethanol aus dem Abwasserstrom und in das Abgas zu strippen.

6. Verfahren nach Anspruch 4, wobei das Abgas aus dem Schritt (i) mindestens eine organische Verbindung enthält;
wobei der Schritt (iia) das Nehmen von Abgas, das während des Schritts (i) hergestellt wird, das Injizieren von Wasser und/oder Ätzmittel zu dem Abgas und das Leiten von wasser- und/oder ätzmittelbehandeltem Abgas durch einen Kondensator umfasst, um mindestens einen zweiten Abgasstrom und einen Abwasserstrom, der mindestens eine organische Verbindung enthält, zu bilden;
und wobei der Schritt (iii) das In-Kontakt-Bringen von dem Abwasserstrom aus dem Schritt (iia), der mindestens eine organische Verbindung enthält, mit Abgas aus dem Schritt (iib) umfasst, um zumindest etwas von der mindestens einen organischen Verbindung aus dem Abwasserstrom in das Abgas zu strippen.

7. Verfahren nach einem der Ansprüche 2 bis 6, wobei das Abgas durch einen Kondensator geleitet wird und organische Bestandteile daraus kondensiert werden.

8. Verfahren nach Anspruch 2 bis 7, wobei der Sauerstoffgehalt des Abgases 3-5 Vol.-% beträgt.

9. Verfahren nach Anspruch 2 bis 8, wobei die mindestens eine organische Verbindung Methanol ist.

10. Verfahren nach Anspruch 9, wobei der Methanolgehalt in dem Abwasserstrom mindestens 1000 ppm beträgt.

11. Verfahren nach Anspruch 4 bis 10, ferner umfassend:
(iv) Leiten von dem Abgas aus dem Schritt (iv) zu einem Kondensator, um ein Kondensat zu bilden, das zu dem Schritt (iii) zurückgeführt wird.

12. Apparat, geeignet zum Durchführen des Verfahrens nach den Ansprüchen 4 bis 11, umfassend:
- eine Vielzahl von Oxidationsreaktoren, die in Reihe miteinander verbunden sind, wobei jeder Reaktor einen Abgasstrom aufweist, die vereint werden, um einen einzigen Abgasstrom zu bilden;
- einen Kondensator, der geeignet ist, um den vereinten Abgasstrom aufzunehmen, wodurch die Bildung einer kondensierten Phase und eines zweiten Abgasstroms ermöglicht wird;
- ein Erwärmungsmittel, das geeignet ist, um den zweiten Abgasstrom, der den Kondensator verlässt, zu erwärmen;
- eine Strippervorrichtung, die geeignet ist, um einen Kontakt von dem erwärmten zweiten Abgas und einem die organische Verbindung enthaltenden Abwasserstrom, der während des Phenolherstellungsverfahrens hergestellt wird, zu ermöglichen.

## Revendications

1. Utilisation d'un gaz de dégagement provenant de l'oxydation de cumène en hydroperoxyde de cumène comprenant principalement de l'azote et 1 à 8 % en volume d'oxygène pour éliminer au moins un composé organique d'un flux d'eaux usées contenant ledit au moins un composé organique formé pendant une production de phénol.

2. Procédé de purification d'un flux d'eaux usées contenant au moins un composé organique formé au cours d'un processus de production de phénol, comprenant les étapes consistant à :
(i) oxyder du cumène en hydroperoxyde de cumène avec de l'air afin de former de l'hydroperoxyde de cumène et un gaz de dégagement ;
(ii) mettre en contact un flux d'eaux usées contenant au moins un composé organique formé pendant une production de phénol avec le gaz de dégagement issu de l'étape (i), afin d'éliminer au moins une partie dudit au moins un composé organique dudit flux d'eaux usées et dans ledit gaz de dégagement ; et
(iii) facultativement oxyder thermiquement ou traiter d'une autre manière le gaz de dégagement issu de l'étape (ii).

3. Procédé selon la revendication 2, comprenant les étapes consistant à :
(i) oxyder du cumène en hydroperoxyde de cumène avec de l'air afin de former de l'hydroperoxyde de cumène et un gaz de dégagement ;
(ii) prélever le gaz de dégagement issu de l'étape (i) et le chauffer ;
(iii) mettre en contact un flux d'eaux usées contenant au moins un composé organique formé pendant une production de phénol avec du gaz de dégagement issu de l'étape (ii), afin d'éliminer au moins une partie dudit au moins un composé organique dudit flux d'eaux usées et dans ledit gaz de dégagement ; et
(iv) facultativement oxyder thermiquement ou traiter d'une autre manière le gaz de dégagement issu de l'étape (iii).

4. Procédé selon la revendication 3, dans lequel l'étape (ii) comprend les étapes consistant à
(iia) prélever le gaz de dégagement produit au cours de l'étape (i) et faire passer ledit gaz à travers un condenseur ;
(iib) prélever le gaz de dégagement qui sort du condenseur et le chauffer.

5. Procédé selon la revendication 4, dans lequel
le gaz de dégagement de l'étape (i) contient du méthanol ;
à l'étape (iia), le gaz de dégagement produit pendant l'étape (i) passe à travers ledit condenseur en présence d'eau ; afin de former au moins un second gaz de dégagement et un flux d'eaux usées qui contient au moins du méthanol en tant que composé organique ;
et dans lequel l'étape (iii) implique la mise en contact dudit flux d'eaux usées issu de l'étape (iia) avec le gaz de dégagement issu de l'étape (iib) afin d'éliminer au moins une partie dudit méthanol dudit flux d'eaux usées et dans ledit gaz de dégagement.

6. Procédé selon la revendication 4, dans lequel ledit gaz de dégagement issu de l'étape (i) contient au moins un composé organique ;
dans lequel l'étape (iia) comprend le prélèvement du gaz de dégagement produit au cours de l'étape (i), l'injection d'eau et/ou de soude caustique dans ledit gaz de dégagement et le passage du gaz traité à l'eau et/ou à la soude caustique à travers un condenseur afin de former au moins un second flux de gaz de dégagement et un flux d'eaux usées contenant au moins un composé organique ;
et dans lequel l'étape (iii) comprend la mise en contact dudit flux d'eaux usées issu de l'étape (iia) qui contient au moins un composé organique avec le gaz de dégagement issu de l'étape (iib) afin d'éliminer au moins une partie dudit au moins un composé organique dudit flux d'eaux usées dans ledit gaz de dégagement.

7. Procédé selon les revendications 2 à 6, dans lequel le gaz de dégagement est passé à travers un condenseur et des matières organiques sont condensées à partir de celui-ci.

8. Procédé selon les revendications 2 à 7, dans lequel la teneur en oxygène du gaz de dégagement est de 3 à 5 % en volume.

9. Procédé selon les revendications 2 à 8, dans lequel ledit au moins un composé organique est le méthanol.

10. Procédé selon la revendication 9, dans lequel la teneur en méthanol dans le flux d'eaux usées est d'au moins 1000 ppm.

11. Procédé selon les revendications 4 à 10, comprenant en outre l'étape consistant à :
(iv) faire passer le gaz de dégagement issu de l'étape (iv) dans un condenseur pour former un condensat qui est recyclé à l'étape (iii).

12. Appareil approprié pour mettre en oeuvre le procédé selon les revendications 4 à 11, comprenant :
- une pluralité de réacteurs d'oxydation connectés en série, chaque réacteur ayant un flux de gaz de dégagement, lesquels sont combinés pour former un flux de gaz de dégagement unique ;
- un condenseur adapté pour accepter ledit flux de gaz de dégagement combiné qui permet la formation d'une phase condensée et d'un second flux de gaz de dégagement ;
- un moyen de chauffage adapté pour chauffer le second gaz de dégagement sortant du condenseur ;
- un dispositif d'élimination adapté pour permettre un contact du second gaz de dégagement chauffé et d'un flux d'eaux usées contenant un composé organique formé pendant le processus de production de phénol.
